# EUROPÄISCHE PATENTANMELDUNG

(11) **EP 4 681 902 A1**
(43) Veröffentlichungstag der Anmeldung: **21.01.2026**
(21) Anmeldenummer: 25189464.8
(22) Anmeldetag: 14.07.2025
(51) Int. Cl.: B29C 45/77, B29C 45/50

(54) **EINSPRITZKRAFTSENSORANORDNUNG SOWIE DAMIT AUSGESTATTETE SPRITZGIESSEINHEIT UND SPRITZGIESSMASCHINE**

(30) Priorität: 19.07.2024 DE 102024120677
(71) Anmelder: ARBURG GmbH + Co KG, 72290 Loßburg (DE)
(72) Erfinder: BLETSCHER, Rainer, 72270 Baiersbronn (DE)
(74) Vertreter: RPK Patenanwälte Reinhardt und Kaufmann Partnerschaft mbB (Pforzheim)

(57) **Zusammenfassung**

Eine Einspritzkraftsensoranordnung (10) für eine Spritzgießeinheit (20) einer Spritzgießmaschine zur Verarbeitung von Kunststoffen weist zwei kreisringförmige Flanschscheiben (30) auf, die einstückig mittels eines Hohlzylinders (40) verbunden sind. Dabei ist eine Wandung (45) des Hohlzylinders (40) entweder bündig an einem Innenradius einer Wandung (35) der kreisringförmigen Flanschscheiben (30) oder in der Mitte zwischen einem Innenradius und einem Außenradius an der Wandung (35) der kreisringförmigen Flanschscheiben (30) angeordnet. Wenigstens ein Verformungssensor (50) ist auf einer Umfangsfläche des Hohlzylinders (40) angeordnet und die Einspritzkraftsensoranordnung (10) ist zwischen einem eine translatorische Kraft übertragenden Bauteil (70) eines Spindelantriebs (80) der Spritzgießeinheit (20) und einem relativ zu diesem Bauteil beweglichen Teil eines Dosierantriebs (55), insbesondere einem Dosiergetriebe (60), der Spritzgießeinheit anordenbar.

## Beschreibung

### Gebiet der Erfindung

Die vorliegende Erfindung betrifft eine Einspritzkraftsensoranordnung für eine Spritzgießeinheit einer Spritzgießmaschine zur Verarbeitung von Kunststoffen und anderen plastifizierbaren Materialien mit den Merkmalen des Anspruchs 1, eine Spritzgießeinheit einer derartigen Spritzgießmaschine mit den Merkmalen des Anspruchs 11 und eine Spritzgießmaschine zur Verarbeitung von Kunststoffen und anderer plastifizierbarer Materialien mit den Merkmalen des Anspruchs 14.

Zur Produktion präziser Kunststoffbauteile ist eine exakte Bestimmung des Kunststoffschmelzedrucks während des Einspritzvorgangs unerlässlich. Dabei besteht ein Interesse vor allem am Schmelzedruck vor einem Fördermittel wie einer Schnecke bzw. Rückstromsperre. Die Schnecke ist aber eine Maschinenkomponente, die sich sowohl rotatorisch als auch translatorisch während des Prozesses bewegt. Diese Tatsache erschwert die direkte Bestimmung bzw. Messung des Einspritzdrucks bzw. der Einspritzkraft.

Um dies zu ermöglichen, gibt es am Markt bereits Systeme, mit denen der Druck direkt in der Schneckenvorkammer oder im Spritzgießwerkzeug über Innendruckaufnehmer ermittelt wird. Diese Bauteile befinden sich in der Schmelzekammer und sind somit sowohl der hohen Temperatur, dem Druck als auch der abrasiv wirkenden Fließgeschwindigkeit der Schmelze ausgesetzt. Diese Randbedingungen machen Innendruckmessungen verschleißbehaftet und kostenintensiv.

Weitere System zielen darauf ab, die Rotation der Schnecke über geeignete Maßnahmen auszuschließen, um eine Einspritzkraftmessung im Einspritzstrang zu realisieren.

Aus der WO 2023/152168 A1 ist z.B. eine Spritzgießeinheit bekannt, die wenigstens einen Motor und wenigstens einen Antrieb zur rotatorischen und translatorischen Bewegung der Schnecke aufweist. Ein Kraftsensor ist zur Kraftmessung und/oder zur Bestimmung der bezüglich der Schnecke der Spritzgießeinheit ausgeübten Kräfte vorgesehen. Der Kraftsensor ist drehfest gegenüber der rotatorischen Bewegung der Schnecke angeordnet. Wenigstens ein Entkopplungselement ist vorgesehen, welches die auf die und/oder von der Schnecke in axialer Richtung entlang und/oder parallel zur Schneckenachse ausgeübten Kräfte von anderen auf die und/oder von der Schnecke ausgeübten Kräften entkoppelt. Der Kraftsensor ist außerdem dazu eingerichtet, die auf die und/oder von der Schnecke in axialer Richtung entlang und/oder parallel zur Schneckenachse ausgeübte Kraft zu erfassen. Durch diese Maßnahmen ergibt sich eine einfache, kostengünstige, präzise und verlässliche Bestimmung der bezüglich der Schnecke der Spritzgießeinheit ausgeübten Kraft, z.B. der Stau- und/oder Einspritzkraft bzw. des entsprechenden Drucks.

Die DE 19 525 142 C1 offenbart ein Verfahren und eine Vorrichtung zur Erfassung der an einem Fördermittel an einer Spritzgießeinheit einer Spritzgießmaschine auftretenden Kräfte, die kennzeichnend sind für einen Druck, der vom zu verarbeitenden Material auf das Fördermittel ausgeübt wird. Dabei sind ein erster statischer Sensor und ein weiterer dynamischer Sensor in einem Kraftmessring eingebaut, der an einer Einspritzbrücke der Spritzgießeinheit zwischen Axialdrucklager und einer Anformung der Einspritzbrücke angeordnet ist. Der weitere dynamische Sensor erfasst die während des Einspritzens auftretenden Kräfte als zweiten Messwert. Sobald der Messwert des ersten statischen Sensors einen Grenzwert erreicht, wird vom ersten statischen Sensor die weitere Erfassung der Kräfte an den weiteren Sensor übergeben, wobei der Grenzwert zugleich als Eichwert für den weiteren Sensor dient.

Aus der DE 10 2019 134 955 A1 ist eine Einspritzvorrichtung einer Spritzgießmaschine bekannt, die einen Einspritzantrieb, welcher eine Einspritzspindel relativ zu einer Spindelmutter drehend ausgebildet ist, einen Einspritzschlitten, welcher auf einer Seitenfläche mit der Spindelmutter drehfest verbunden und entlang einer Schlittenführung bewegbar gehalten ist, ein Führungsgehäuse, an welchem ein Plastifizierzylinder gehalten ist, ein Lagerungsgehäuse, in welchem eine Antriebswelle drehbar gelagert ist und welches mit dem Einspritzschlitten verbunden ist, und einen an dem Einspritzschlitten befestigen Dosierantrieb aufweist, welcher die Antriebswelle drehend ausgebildet ist. Eine Krafterfassungseinrichtung ist außenliegend auf einem zwischen dem Lagerungsgehäuse und Spindelmutter angeordneten und im Kraftfluss der Einspritzvorrichtung liegenden Kraftübertragungsbauteil befestigt.

Die DE 102 10 923 A 1 zeigt eine Druckmesseinrichtung für eine Spritzgießmaschine, welche zwischen der Plastifizierschnecke und einem diese in Axialrichtung betätigenden Hubantrieb einer Spritzgießmaschine angeordnet ist und ein elastisch verformbares Kraftübertragungsglied aufweist, welches unter der axialen Krafteinwirkung des Hubantriebs eine Biegeverformung erfährt, die zur Ermittlung des Einspritzdrucks elektrisch oder optoelektrisch gemessen wird.

Der Erfindung liegt daher die Aufgabe zugrunde, eine Einspritzkraftsensoranordnung für eine Spritzgießeinheit einer Spritzgießmaschine anzugeben, die es ermöglicht, eine Einspritzkraftmessung zentral im Einspritzstrang vorzunehmen, wobei nur wenige Komponenten zwischen Messeinrichtung und Schmelzedruck verbaut sind und wobei das Messergebnis nicht von einer Rotationskraft eines Fördermittels wie einer Förder- und Plastifizierschnecke beeinflusst wird.

Die Aufgabe wird mit einer Einspritzkraftsensoranordnung gemäß den Merkmalen des Anspruchs 1 gelöst. Dabei weist die Einspritzkraftsensoranordnung zwei kreisringförmige Flanschscheiben auf, die einstückig mittels eines Hohlzylinders verbunden sind. Dabei ist eine Wandung des Hohlzylinders entweder bündig an einem Innenradius einer Wandung der kreisringförmigen Flanschscheiben oder in der Mitte zwischen einem Innenradius und einem Außenradius an der Wandung der kreisringförmigen Flanschscheiben angeordnet ist. Wenigstens ein Verformungssensor ist auf einer Umfangsfläche des Hohlzylinders angeordnet und die Einspritzkraftsensoranordnung ist zwischen einem eine translatorische Kraft übertragenden Bauteil eines Spindelantriebs der Spritzgießeinheit und einem relativ zu diesem Bauteil beweglichen Teil eines Dosierantriebs, wie z.B. einem Dosiergetriebe, der Spritzgießeinheit anordenbar. Zur Einspritzkraftmessung wird die Relativbewegung zwischen dem eine translatorische Kraft übertragenden Bauteil des Spindelantriebs, das der Einspritzvorrichtung zur axialen Bewegung eines Fördermittels dient, und dem Dosierantrieb erfasst und vorzugsweise sowohl als Druck- als auch als Zugkraft ausgewertet.

Die Einspritzkraftsensoranordnung ist geometrisch so ausgelegt, dass bis zu 100% Überlast nicht zum Versagen führen. Gleichzeitig ist im Kleinsignalbereich eine ausreichende Verformung auf dem Sensorgrundkörper gewährleistet, wobei bei einer Dekompression oder einem positivem Staudruck maximal 20% der Einspritzkraft erzeugt wird, so dass mit den verbauten Verformungssensor noch eine sichere und prozessgenaue Kraftmessung ermöglicht ist. Aufgrund der nur wenigen Komponenten, die zwischen Messeinrichtung und Schmelzedruck verbaut sind, liegt in der Regel ein durch die Komponenten allenfalls geringfügig beeinflusstes Messergebnis vor.

Die Aufgabe wird auch mit einer Spritzgießeinheit für eine Spritzgießmaschine mit einer Einspritzkraftsensoranordnung nach einem der Ansprüche 1 bis 10 gemäß den Merkmalen des Anspruchs 11 gelöst. Die Spritzgießeinheit umfasst einen Dosierantrieb, z.B. mit einen Dosiergetriebe und einen damit verbundenen Spindelantrieb. Zwischen einem eine translatorische Kraft übertragenden Bauteil des Spindelantriebs und einem relativ zu diesem Bauteil beweglichen Teil eines Dosierantriebs, insbesondere dem Dosiergetriebe, der Spritzgießeinheit ist die Einspritzkraftsensoranordnung angeordnet, die dadurch in der Lage ist, die Relativbewegung sensorisch zu erfassen.

Weiterhin wird die Aufgabe auch mit einer Spritzgießmaschine zur Verarbeitung von Kunststoffen und anderer plastifizierbarer Materialien mit den Merkmalen des Anspruchs 14 gelöst. Dabei weist sie eine Einspritzkraftsensoranordnung nach einem der Ansprüche 1 bis 10 für eine Spritzgießeinheit nach einem der Ansprüche 11 bis 13 auf.

Vorteilhafte Weiterbildungen sind Gegenstand der abhängigen Ansprüche.

In einer bevorzugten die Rotationskraft der Förder- und Plastifizierschnecke vorteilhaft optimal unterdrückenden bzw. die Ausführung der Einspritzkraftsensoranordnung vereinfachenden Ausführungsform wird bei einer Anordnung der Einspritzkraftsensoranordnung zwischen dem eine translatorische Kraft übertragenden Bauteil des Spindelantriebs und dem relativ zu diesem Bauteil beweglichen Teil des Dosierantriebs, wie z.B. dem Dosiergetriebe, der Spritzgießeinheit die translatorische Kraft rechtwinklig zu kreisringförmigen Flächen der kreisringförmigen Flanschscheiben in der Nähe des Außenradius der kreisringförmigen Flanschscheiben übertragen, wenn die Wandung des Hohlzylinders bündig an der Wandung des Innenradius der kreisringförmigen Flanschscheiben angeordnet ist. Alternativ wird die translatorische Kraft rechtwinklig zu kreisringförmigen Flächen der kreisringförmigen Flanschscheiben in der Mitte zwischen einem Innenradius und einem Außenradius der kreisringförmigen Flanschscheiben übertragen, wenn die Wandung des Hohlzylinders in der Mitte zwischen einem Innenradius und einem Außenradius an der Wandung der kreisringförmigen Flanschscheiben angeordnet ist. Die translatorische Kraft greift damit parallel zu einer Mittelachse der kreisringförmigen Flanschscheiben und damit in der Regel parallel zur Spritzachse an den kreisringförmigen Flanschscheiben in der Wandung des Hohlzylinders an.

Bevorzugterweise vermeidet eine weitere Ausführungsform der Einspritzkraftsensoranordnung vorteilhaft eine Übertragung einer Rotationskraft des Spindelantriebs dadurch, dass das die translatorische Kraft übertragenden Bauteil eine nicht rotierende Spindelmutter oder ein die nicht rotierende Spindelmutter und einen Gewindetrieb umgebendes und mit diesen verbundenes Gehäuse ist.

Vorteilhaft ist in einer anderen bevorzugten Ausführungsform die Ausführung des Verformungssensors und die Messung der Einspritzkraft dadurch vereinfacht, dass der mindestens eine Verformungssensor wenigstens ein Dehnungsmessstreifen ist, der eingerichtet ist, eine Expansion oder Kontraktion der Wandung des Hohlzylinders zu detektieren.

Ebenso ist in einer weiteren bevorzugten Ausführungsform die Messung der Einspritzkraft vorteilhaft dadurch vereinfacht, dass der mindestens eine Verformungssensor eine optische und/oder messtechnische Einheit ist, die eingerichtet ist, eine Abstandsveränderung zwischen den kreisringförmigen Flanschscheiben zu detektieren.

Eine bevorzugte Ausführungsform der Einspritzkraftsensoranordnung ermöglicht vorteilhaft eine hochpräzise Einspritzkraftmessung dadurch, dass entweder vier Verformungssensoren auf der Umfangsfläche des Hohlzylinders um jeweils 90° versetzt angeordnet sind oder zwei Verformungssensoren, die auf der Umfangsfläche des Hohlzylinders angeordnet sind, sich um 180° versetzt gegenüberliegen und zwei weitere Verformungssensoren, die ebenfalls auf der Umfangsfläche des Hohlzylinders angeordnet sind und sich auch um 180° versetzt gegenüberliegen, um einen Wert, der kleiner 90° ist, versetzt zu den beiden ersten Verformungssensoren angeordnet sind. Dabei sind die Verformungssensoren jeweils zu einer elektrischen Halb- oder Vollbrücke verschaltet.

Bevorzugt ist in einer weiteren die Signalübertragung der Einspritzkraftsensoranordnung und deren Montage vorteilhaft vereinfachenden Ausführungsform der mindestens eine Verformungssensor über mindestens eine elektrische Signalleitung mit einer an einer der kreisringförmigen Flanschscheiben und/oder dem Hohlzylinder angeordneten elektrischen Kupplung verbunden, die mit einer elektrischen Signalverstärker- und Auswerteeinheit verbindbar ist.

Eine andere bevorzugte Ausführungsform der Einspritzkraftsensoranordnung erhöht vorteilhaft einen Schutz des mindestens einen Verformungssensors, der mindestens einen elektrischen Signalleitung und der elektrischen Kupplung dadurch, dass der mindestens eine Verformungssensor auf einer vorgefertigten, insbesondere vertieften, Fläche auf der Umfangsfläche des Hohlzylinders - innenseitig oder außenseitig - angeordnet ist, die mindestens eine elektrische Signalleitung in mindestens einem vorgefertigten Kanal der Wandung des Hohlzylinders und/oder der Wandung einer der kreisringförmigen Flanschscheiben angeordnet ist und die elektrische Kupplung auf einer vorgefertigten, vertieften Fläche einer der kreisringförmigen Flanschscheiben angeordnet ist.

In einer weiteren bevorzugten Ausführungsform wird vorteilhaft die Montage dadurch erleichtert, dass der mindestens eine Verformungssensor, die mindestens eine elektrische Signalleitung und die elektrische Kupplung auf einem Trägersystem, insbesondere einem Blechring, vormontiert sind, das eingerichtet ist, mit dem Einspritzkraftsensor verbunden zu werden und den mindestens einen Verformungssensor auf der Umfangsfläche des Hohlzylinders anzuordnen.

In einer bevorzugten vorteilhaft den Einsatzbereich des Einspritzkraftsensors erweiternden Ausführungsform des Einspritzkraftsensors ist die Geometrie des Einspritzkraftsensors, insbesondere der Innenradius, der Außenradius und die Dicke der Wandung, der kreisringförmigen Flanschscheiben sowie die Länge und Dicke der Wandung des Hohlzylinders auf einen zu messenden Kraftbereich anpassbar.

In einer bevorzugten die Montage und Wartung der Spritzgießeinheit vorteilhaft erleichternden Ausführungsform der Spritzgießeinheit ist entweder der Einspritzkraftsensor mit dem Teil des Dosierantriebs der Spritzgießeinheit und/oder mit dem eine translatorische Kraft übertragenden Bauteil des Spindelantriebs wirkverbunden, wie z.B. verschraubt, oder der Einspritzkraftsensor und das Teil des Dosierantriebs sind aus einem Guss bzw. ist der Einspritzkraftsensor in das Dosiergetriebe integriert und mit dem eine translatorische Kraft übertragenden Bauteil des Spindelantriebs wirkverbunden, wie z.B. verschraubt.

Eine andere bevorzugte Ausführungsform der Spritzgießeinheit verkürzt vorteilhaft die Einbaulänge der Spritzgießeinheit dadurch, dass ein Innendurchmesser der Wandung der kreisringförmigen Flanschscheiben größer als ein Außendurchmesser einer Gewindespindel des Spindelantriebs ist.

Die Erfindung wird nun anhand eines Ausführungsbeispiels näher erläutert. Es zeigen:
- Fig. 1: eine perspektivische Gesamtansicht einer Spritzgießeinheit einer Spritzgießmaschine,
- Fig. 2: eine perspektivische Teilansicht der Spritzgießeinheit aus Fig. 1 mit einer ersten Ausführungsform der Einspritzkraftsensoranordnung,
- Fig. 3: eine perspektivische Detailansicht der ersten Ausführungsform der Einspritzsensoranordnung aus Fig. 2 mit einem Detailschnittbild,
- Fig. 4: eine perspektivische Detailansicht der ersten Ausführungsform der Einspritzsensoranordnung aus Fig. 2 mit einer Trägereinheit und einem Detailschnittbild,
- Fig. 5: eine perspektivische Teilansicht der Spritzgießeinheit aus Fig. 1 mit einer zweiten Ausführungsform der Einspritzkraftsensoranordnung,
- Fig. 6: eine perspektivische Detailansicht der zweiten Ausführungsform der Einspritzsensoranordnung mit einem Detailschnittbild,
- Fig. 7: eine perspektivische Ansicht eines Dosiergetriebes mit einer integrierten Einspritzkraftsensoranordnung.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

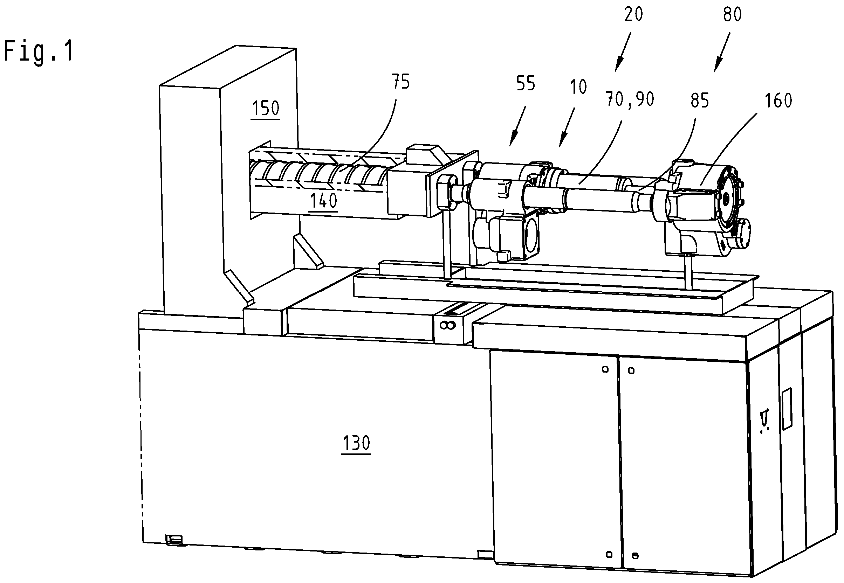

Fig. 1 zeigt eine Spritzgießeinheit 20 mit einem Spindelantrieb 80 als Teil einer Spritzgießmaschine zur Verarbeitung von Kunststoffen und anderer plastifizierbarer Materialien, die auf einem Maschinenständer 130 angeordnet ist.

Aufbau und Betrieb einer Spritzgießmaschine sind dem Fachmann grundsätzlich bekannt. Der Spritzgießmaschine werden Kunststoffe oder andere plastifizierbare Materialien zugeführt, die in einem Plastifizierzylinder 140 der Spritzgießeinheit 20 gemischt, plastifiziert und homogenisiert werden. Während des Plastifizierungsvorgangs wird vor einem Fördermittel 75 wie einer Schnecke plastifiziertes Material aufdosiert. Im Anschluss wird durch eine Axialbewegung des Fördermittels 75 das plastifizierte Material in einen Formhohlraum einer zeichnerisch nicht dargestellten Spritzgießform eingespritzt, die im Betriebszustand zwischen einem in Fig. 1 zeichnerisch nicht dargestellten beweglichem Formträger und einem nicht beweglichem Formträger 150 aufgenommen ist. Während des Einspritzvorgangs ist die Spritzgießform durch eine Formschließeinheit geschlossen, die in Fig. 1 auf der der Spritzgießeinheit 20 gegenüber liegenden Seite des nicht beweglichen Formträgers 150 angeordnet wäre, der Einfachheit halber aber in Fig. 1 nicht dargestellt ist. Sobald das eingespritzte plastifizierte Material im Formhohlraum ausgehärtet ist, wird mittels der Formschließeinheit die Spritzgießform wieder geöffnet, so dass das fertige Spritzteil entnommen werden kann. Dieser Prozess erfolgt zyklisch.

Der Spindelantrieb 80 zur Axialbewegung des Fördermittels 75 umfasst im Ausführungsbeispiel eine rotierende Gewindespindel 85, die über einen nicht dargestellten Gewindetrieb, insbesondere einen Kugelgewindetrieb oder Planetenrollengewindetrieb, mit einer ebenso nicht dargestellten, nicht rotierenden Spindelmutter verbunden ist. Die Spindelmutter bildet insofern ein eine translatorische Kraft übertragendes Bauteil 70, von der nur die Außenseite zu sehen ist, die wie ein Gehäuse 90 wirkt. Spindelmutter und der Gewindetrieb können aber auch in einem Gehäuse 90 angeordnet und mit diesem verbunden sein. Das Bauteil 70 bzw. das Gehäuse 90 bildet bzw. enthält die Spindelmutter, welche mit der Gewindespindel 85 den Spindelantrieb (Planetenrollengewindetrieb oder Kugelgewindetrieb) bildet.

In der Regel wird die Gewindespindel 85 ohne Einhausung verbaut. Ist jedoch statt einen Schmiersystem mit Fett z.B. eine Ölbadschmierung erwünscht, wird die Gewindespindel 85 sinnvollerweise in einem Gehäuse angeordnet, weil dort die Abdichtung einfacher ist.

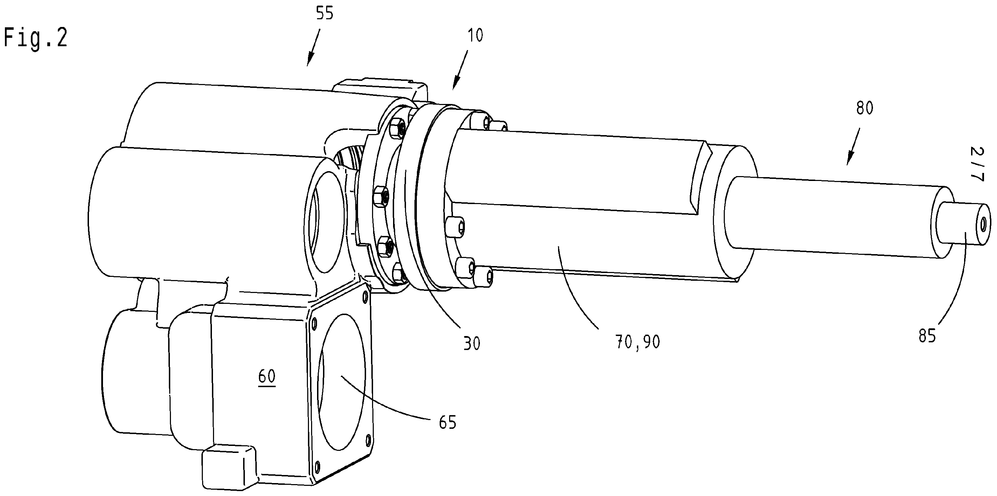

Fig. 2 ist eine Teilansicht der Spritzgießeinheit aus Fig. 1, die den Spindelantrieb 80 in der Figur auf der rechten Seite und einen Dosierantrieb 55 mit einem in einem Gehäuse aufgenommen Dosiergetriebe 60 auf der linken Seite der Figur zeigt. Erkennbar ist unten noch die Aufnahme 65 für den Motor des Dosierantriebs.

Der Dosierantrieb 55 als auch das Dosiergetriebe sind axial beweglich in Richtung einer Spritzachse, die durch das Fördermittel 75 verläuft, damit über den Spindelantrieb 80 das Fördermittel 75 wie eine Schnecke im Plastifizierzylinder 140 nach vorne geschoben werden kann. Durch diese Bewegung wird die plastifizierte Masse in den Formhohlraum eines Spritzgießwerkzeugs eingespritzt. Feststehend ist im Ausführungsbeispiel in Fig. 1 das hintere Einspritzgetriebe 160, an dem sich der Spindelantrieb 80 abstützt, um die Einspritzkraft aufzubringen.

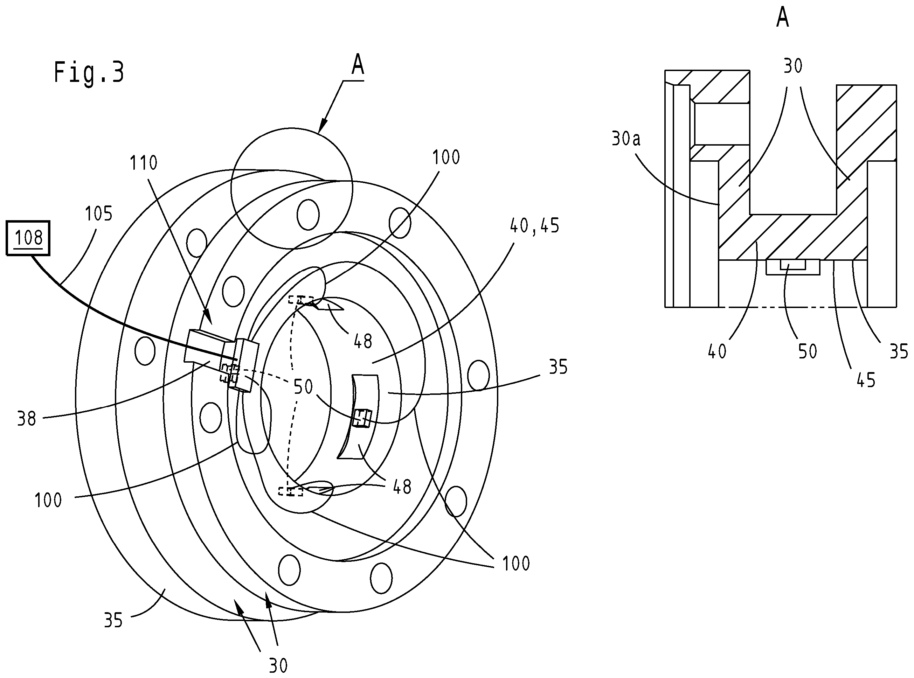

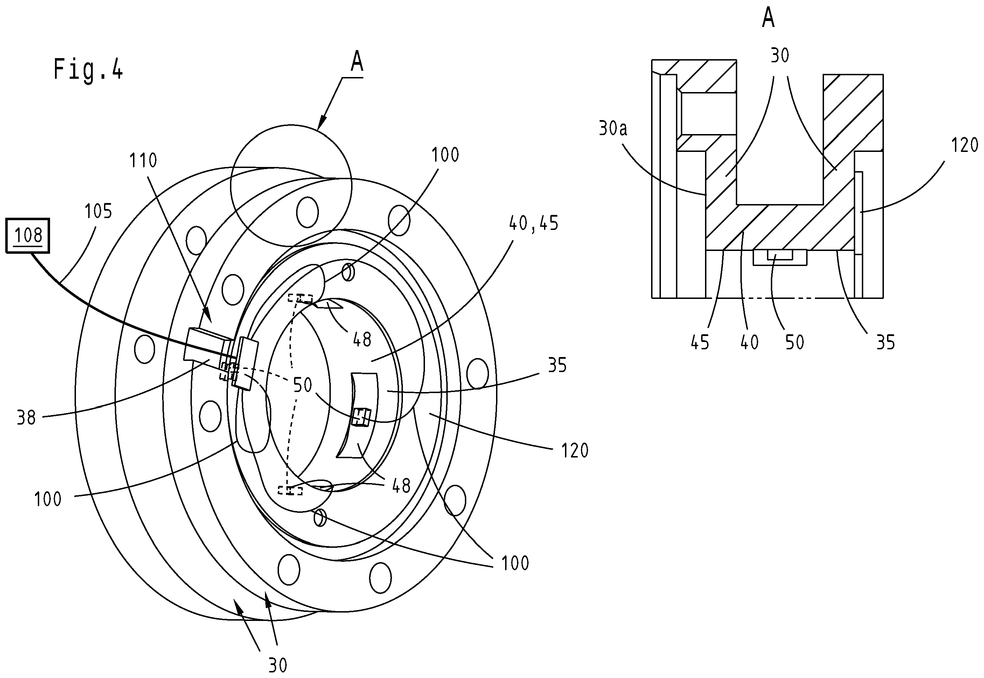

In Fig. 3 und 4 sind Detailansichten der Fig. 2 mit einer ersten Ausführungsform der Einspritzkraftsensoranordnung 10 abgebildet. Darin weist die Einspritzkraftsensoranordnung 10 zwei kreisringförmige Flanschscheiben 30 auf, die einstückig mittels eines Hohlzylinders 40 verbunden sind, wobei eine Innenwandung 45 des Hohlzylinders 40 bündig an einem Innenradius einer Wandung 35 der kreisringförmigen Flanschscheiben 30 angeordnet ist.

Bündig bedeutet dabei, dass die Wandung 35 am Innenradius der kreisringförmigen Flächen 30 etwa flächengleich zur Wandung 45 des Hohlzylinders liegt, d.h. die Wandungen gehen ineinander über.

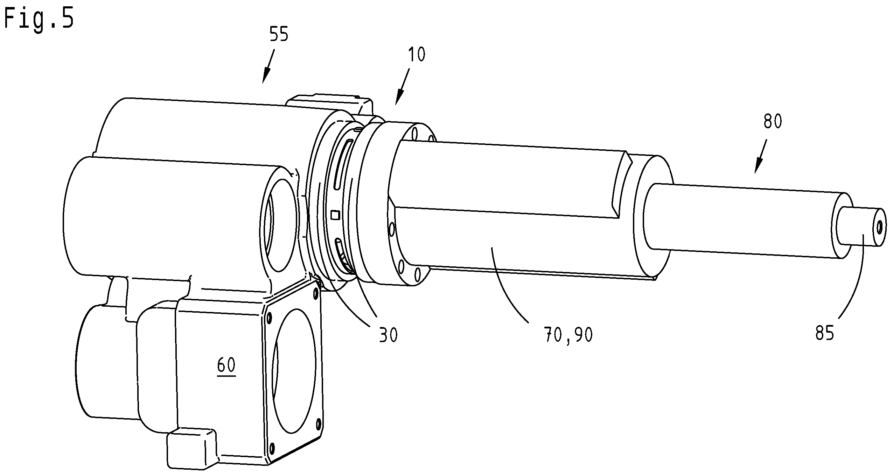

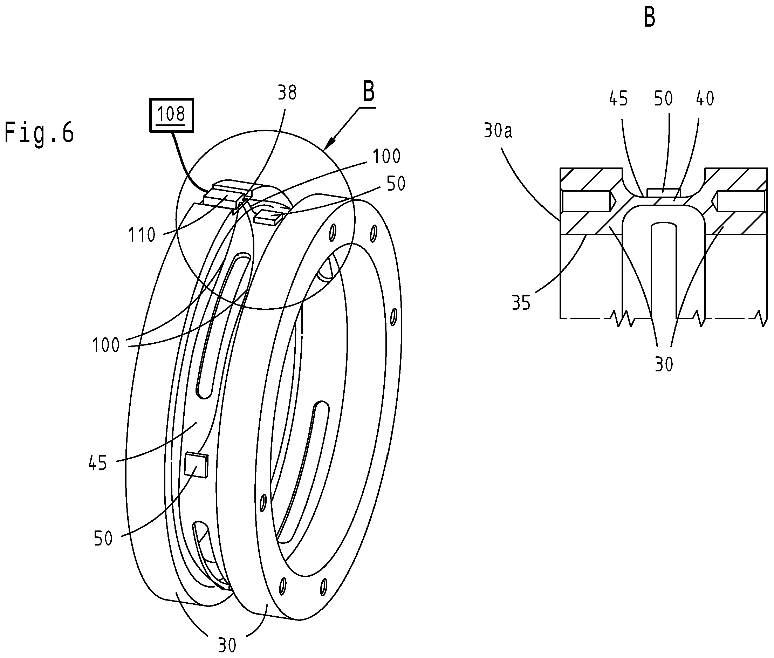

In Fig. 5 ist eine Teilansicht der Spritzgießeinheit aus Fig. 1 und in Fig. 6 ist eine Detailansicht der Fig. 5 mit einer zweiten Ausführungsform der Einspritzkraftsensoranordnung 10 abgebildet. Darin weist die Einspritzkraftsensoranordnung 10 zwei kreisringförmige Flanschscheiben 30 auf, die einstückig mittels eines Hohlzylinders 40 verbunden sind, wobei eine Wandung 45 des Hohlzylinders 40, die sich quer zu den kreisringförmigen Flanschscheiben 30 parallel zur Mittelachse der kreisringförmigen Flanschscheiben erstreckt, in der Mitte zwischen einem Innenradius und einem Außenradius an der Wandung 35 der kreisringförmigen Flanschscheiben 30 angeordnet ist.

Dabei ist jeweils wenigstens ein Verformungssensor 50 auf einer Umfangsfläche des Hohlzylinders 40 angeordnet, vorzugsweise in einem in Fig. 6. Detail B, erkennbaren verdünnten Bereich. Die Einspritzkraftsensoranordnung 10 ist dazu eingerichtet, zwischen einem eine translatorische Kraft übertragenden Bauteil 70 des Spindelantriebs 80 einer das Fördermittel 75 axial bewegenden Einspritzvorrichtung der Spritzgießeinheit 20 und einem relativ zu diesem Bauteil beweglichen Teil eines Dosierantriebs 55, insbesondere einem Dosiergetriebe 60, der Spritzgießeinheit angeordnet zu werden. Zur Einspritzkraftmessung wird die Relativbewegung zwischen dem Bauteil 70 des Spindelantriebs, das der Einspritzvorrichtung zur axialen Bewegung des Fördermittels 75 dient, und dem Dosierantrieb 55 erfasst und ausgewertet. Diese Relativbewegung verformt die Einspritzkraftsensoranordnung 10, so dass die Verformung zur Auswertung der Einspritzkraft mittels wenigstens eines Verformungssensors 50 gemessen werden kann. Dadurch ist der Einfluss einer Schneckenrotation einer Förder- und Plastifizierschnecke der Spritzgießeinheit 20 weitestgehend eliminiert und eine einfache sowie genaue Kraftmessung der Zug- und Druckkräfte ermöglicht, die dem Schmelzedruck entsprechen.

Der Einfluss einer Rotationskraft des Fördermittels 75, wie z.B. der Förder- und Plastifizierschnecke, kann vorteilhaft optimal dadurch unterdrückt werden, dass die Schneckenrotation im Inneren des Dosierantriebs 55 bzw. des Dosiergetriebes 60 stattfindet, während die Einspritzkraftsensoranordnung 10 am "nur" translatorisch verschiebbaren Teil des Dosierantriebs angebracht und so eingebaut, dass die Rotation keinen Einfluss auf den Sensor ausübt.

Dabei wird gemäß der ersten Ausführungsform nach den Fig. 2, 3 und 4 bei einer Anordnung der Einspritzkraftsensoranordnung 10 zwischen dem eine translatorische Kraft übertragenden Bauteil 70 des Spindelantriebs 80 und dem relativ zu diesem Bauteil beweglichen Teil des Dosierantriebs 55 wie z.B. dem Dosiergetriebe 60, die translatorische Kraft rechtwinklig zu kreisringförmigen Flächen 30a der kreisringförmigen Flanschscheiben 30 in der Nähe des Außenradius der kreisringförmigen Flanschscheiben 30 übertragen, wenn die Wandung 45 des Hohlzylinders 40 bündig an der Wandung 35 des Innenradius der kreisringförmigen Flanschscheiben 30 angeordnet ist. Fig. 3 und 4 zeigen dies, wobei in der jeweiligen Schnittansicht A zu erkennen ist, dass die Wandungen 35 der kreisringförmigen Flanschscheiben 30 und die Wandung 45 des Hohlzylinders 40 eine einstückige U-förmige Gestalt aufweisen. Durch diese Anordnung wird die Biegung der Einspritzanordnung in eine Stauchung und Längung umgewandelt, die durch den Verformungssensor 50 erfassbar ist.

Die translatorische Kraft greift damit parallel zu einer Mittelachse der kreisringförmigen Flanschscheiben 30 und damit in der Regel parallel zu einer Spritzachse an den kreisringförmigen Flanschscheiben 30 an und wird dabei in der Wandung 45 des Hohlzylinders 40 parallel zu einer Mittelachse des Hohlzylinders übertragen.

Die Ausführung der Einspritzkraftsensoranordnung kann dadurch vereinfacht werden, dass, wie in einer zweiten Ausführungsform nach den Fig. 5 und 6, die translatorische Kraft rechtwinklig zu den kreisringförmigen Flächen 30a der kreisringförmigen Flanschscheiben 30 in der Mitte zwischen einem Innenradius und einem Außenradius der kreisringförmigen Flanschscheiben 30 übertragen wird, wenn die Wandung 45 des Hohlzylinders 40 in der Mitte zwischen einem Innenradius und einem Außenradius an der Wandung 35 der kreisringförmigen Flanschscheiben 30 angeordnet ist. Wie in Fig. 6 in Detail B abgebildet, weisen die Wandungen 35 der kreisringförmigen Flanschscheiben 30 und die Wandung 45 des Hohlzylinders 40 in diesem Fall eine H-förmige Gestalt auf. Gegenüber der ersten Ausführungsform kann der Hohlzylinder 40 eine dünnere Wandstärke aufweisen. Im Bereich des dünnen Querschnitts findet infolge der Zug- und Druckkräfte eine Stauchung bzw. Dehnung statt, die vom Verformungssensor 50 erfassbar ist.

Die translatorische Kraft greift damit auch hier parallel zu einer Mittelachse der kreisringförmigen Flanschscheiben 30 und damit in der Regel parallel zur Spritzachse an den kreisringförmigen Flanschscheiben 30 an. Sie wird dabei auch hier in der Wandung 45 des Hohlzylinders 40 parallel zu einer Mittelachse des Hohlzylinders übertragen.

Das die translatorische Kraft übertragende Bauteil 70 kann die nicht rotierende Spindelmutter sein oder kann, wie in Fig. 2 und 5 dargestellt, ein die nicht rotierende Spindelmutter und einen Gewindetrieb umgebendes und mit diesen verbundenes Gehäuse 90 sein, wie oben erläutert. Dies vermeidet vorteilhaft die Übertragung einer Rotationskraft des Spindelantriebs 80 im dem Zustand der Einspritzkraftsensoranordnung 10, in dem sie mit dem Teil des Dosierantriebs 55 und der nicht rotierenden Spindelmutter bzw. dem die nicht rotierende Spindelmutter und einen Gewindetrieb umgebenden und mit diesen verbundenen Gehäuse 90 wirkverbunden ist.

Der mindestens eine Verformungssensor 50 kann wenigstens ein Dehnungsmessstreifen sein, der eingerichtet ist, eine Expansion oder Kontraktion der Wandung 45 des Hohlzylinders 40 zu detektieren, wie in Fig. 3, 4 und 6 abgebildet. Dadurch wird die Ausführung des Verformungssensors und die Messung der Einspritzkraft vorteilhaft vereinfacht.

Der mindestens eine Verformungssensor 50 kann auch eine optische und/oder messtechnische Einheit sein, die eingerichtet ist, eine Abstandsveränderung zwischen den kreisringförmigen Flanschscheiben 30 zu detektieren. Dies vereinfacht ebenfalls vorteilhaft die Messung der Einspritzkraft.

Wenn entweder vier Verformungssensoren 50 auf der Umfangsfläche des Hohlzylinders 40 um jeweils 90° versetzt angeordnet sind, wie in Fig. 3, 4 abgebildet, kann eine Einspritzkraft vorteilhaft mit hoher Präzision ermittelt werden. Dies ist ebenso gegeben, wenn alternativ zwei Verformungssensoren 50, die auf der Umfangsfläche des Hohlzylinders 40 angeordnet sind, sich um 180° versetzt gegenüberliegen und zwei weitere Verformungssensoren 50, die ebenfalls auf der Umfangsfläche des Hohlzylinders 40 angeordnet sind und sich auch um 180° versetzt gegenüberliegen, um einen Wert, der kleiner 90° ist, versetzt zu den beiden ersten Verformungssensoren 50 angeordnet sind. In beiden Anordnungsformen der Verformungssensoren 50 können die Verformungssensoren 50 so angeordnet werden, dass sich eine elektrische Halb- oder Vollbrücke ergibt.

Die Signalübertragung der Einspritzkraftsensoranordnung 10 und dessen Montage 10 kann vorteilhaft dadurch vereinfacht werden, dass der mindestens eine Verformungssensor 50 über mindestens eine elektrische Signalleitung 100 mit einer an einer der kreisringförmigen Flanschscheiben 30 und/oder dem Hohlzylinder 40 angeordneten elektrischen Kupplung 110 verbunden ist, die mit einer elektrischen Signalverstärker- und Auswerteeinheit 108 verbindbar ist, wie in Fig. 3, 4 und 6 abgebildet.

Wie in Fig. 3 und 4 zu erkennen, kann ein Schutz des mindestens einen Verformungssensors 50, der mindestens einen elektrischen Signalleitung 100 und der elektrischen Kupplung 110 vorteilhaft gegenüber äußeren Einflüssen, wie z. B. einer Berührung bei einem Durchtauchen der Gewindespindel 85 durch den Hohlraum des Hohlzylinders 40, dadurch verbessert werden, dass der mindestens eine Verformungssensor 50 auf einer vorgefertigten, insbesondere vertieften, Fläche 38 auf der Umfangsfläche des Hohlzylinders 40 angeordnet ist und/oder die mindestens eine elektrische Signalleitung 100 in mindestens einem vorgefertigten Kanal der Wandung 45 des Hohlzylinders 40 und/oder der Wandung 35 einer der kreisringförmigen Flanschscheiben 30 angeordnet ist und/oder die elektrische Kupplung 110 auf einer vorgefertigten, vertieften Fläche 48 einer der kreisringförmigen Flanschscheiben 30 angeordnet ist.

Der mindestens eine Verformungssensor 50, die mindestens eine elektrische Signalleitung 100 und die elektrische Kupplung 110 können auf einem Trägersystem 120, insbesondere einem Blechring, vormontiert sein, wie in Fig. 4 abgebildet, das eingerichtet ist, mit der Einspritzkraftsensoranordnung 10 verbunden zu werden und den mindestens einen Verformungssensor 50 auf der Umfangsfläche des Hohlzylinders 40 anzuordnen. Dies erleichtert vorteilhaft die Montage der Einspritzkraftsensoranordnung 10.

Der mindestens eine Verformungssensor 50 und/oder die mindestens eine elektrische Signalleitung 100 und/oder die elektrische Kupplung 110 können außerdem mit einer Schutzschicht, insbesondere einem Harz, einem Lack und/oder einer Folie überzogen werden, wodurch deren Schutz gegenüber äußeren Einflüssen ebenfalls vorteilhaft verbessert wird.

Besonders vorteilhaft kann der Einsatzbereich der Einspritzkraftsensoranordnung 10 dadurch erweitert werden, dass ihre Geometrie, insbesondere wenigstens eines der Elemente umfassend den Innenradius, den Außenradius und die Dicke der Wandung 35 der kreisringförmigen Flanschscheiben 30 sowie die Länge und Dicke der Wandung 45 des Hohlzylinders 40 auf einen zu messenden Kraftbereich anpassbar ist.

Eine Spritzgießeinheit 20 einer Spritzgießmaschine kann somit vorteilhaft mit einer erfindungsgemäßen Einspritzkraftsensoranordnung 10 ausgerüstet werden. Dabei umfasst die Spritzgießeinheit 20 ein Teil des Dosierantriebs 55 und einen damit verbundenen Spindelantrieb 80, wobei zwischen einem eine translatorische Kraft übertragenden Bauteil 70 des Spindelantriebs 80 und einem relativ zu diesem Bauteil 70 beweglichen Teil des Dosierantriebs 55, insbesondere einem Dosiergetriebe 60, eine Relativbewegung infolge der Einspritzkraft entsteht. Die hier angeordnete Einspritzkraftsensoranordnung 10 erfasst und misst diese Einspritzkraft.

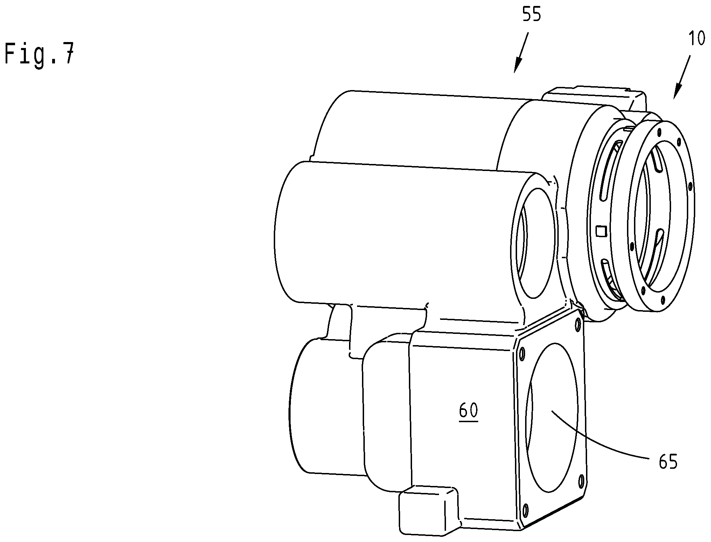

Eine Montage und Wartung der Spritzgießeinheit kann vorteilhaft dadurch erleichtert werden, dass entweder die Einspritzkraftsensoranordnung 10 mit und dem Teil des Dosierantriebs 55, wie z.B. dem Dosiergetriebe 60, und/oder mit dem eine translatorische Kraft übertragenden Bauteil 70 des Spindelantriebs 80 wirkverbunden ist, wie in Fig. 2 abgebildet, oder die Einspritzkraftsensoranordnung 10 und das Teil des Dosierantriebs 55, wie z.B. das Dosiergetriebe 60, aus einem Guss sind, wie in Fig. 5 abgebildet bzw. alternativ die Einspritzkraftsensoranordnung 10 in das Teil des Dosierantriebs 55, wie z.B. das Dosiergetriebe 60, integriert ist, wie in Fig. 7 abgebildet, und mit dem eine translatorische Kraft übertragenden Bauteil 70 des Spindelantriebs 80 wirkverbunden ist, wie in Fig. 5 und 7 angedeutet. Die Wirkverbindung kann auf beliebige Weise, z.B. durch Verschrauben, Vernieten, Verschweißen oder dergleichen hergestellt werden. Gemäß Figur 7 muss die Einspritzkraftsensoranordnung 10 nicht in einem zusätzlichen Teil integriert sein, sondern kann ein Bestandteil vom Getriebegehäuses sein.

Eine Einbaulänge der Spritzgießeinheit kann vorteilhaft dadurch verkürzt werden, dass ein Innendurchmesser der Wandung 35 der kreisringförmigen Flanschscheiben 30 größer als ein Außendurchmesser einer Gewindespindel 85 des Spindelantriebs 80 ist. Dadurch kann die Gewindespindel 85 durch einen Hohlraum hindurchtauchen, der durch den Innendurchmesser der kreisringförmigen Flanschscheiben 30 definiert ist.

### Bezugszeichenliste

- 10: Einspritzkraftsensoranordnung
- 20: Spritzgießeinheit
- 30: kreisringförmige Flanschscheiben
- 30a: kreisringförmige Flächen
- 35: Wandung der Flanschscheibe
- 38: vertiefte Fläche der Flanschscheibe
- 40: Hohlzylinder
- 45: Wandung des Hohlzylinders
- 48: vertiefte Fläche auf Umfangsfläche des Hohlzylinders
- 50: Verformungssensor
- 55: Dosierantrieb
- 60: Dosiergetriebe
- 65: Aufnahme für Motor von 55
- 70: translatorische Kraft übertragendes Bauteil
- 75: Fördermittel
- 80: Spindelantrieb
- 85: Gewindespindel
- 90: Gehäuse
- 100: elektrische Signalleitung
- 105: Leitung
- 108: Signalverstärker- und Auswerteeinheit
- 110: elektrische Kupplung
- 120: Trägersystem
- 130: Maschinenständer
- 140: Plastifizierzylinder
- 150: nicht beweglicher Formträger
- 160: Einspritzgetriebe

## Patentansprüche

1. Einspritzkraftsensoranordnung (10) für eine Spritzgießeinheit (20) einer Spritzgießmaschine zur Verarbeitung von Kunststoffen und anderen plastifizierbaren Materialien,
**dadurch gekennzeichnet,**
**dass** die Einspritzkraftsensoranordnung (10) zwei kreisringförmige Flanschscheiben (30) aufweist, die einstückig mittels eines Hohlzylinders (40) verbunden sind, wobei eine Wandung (45) des Hohlzylinders (40) entweder bündig an einem Innenradius einer Wandung (35) der kreisringförmigen Flanschscheiben (30) oder in der Mitte zwischen einem Innenradius und einem Außenradius an der Wandung (35) der kreisringförmigen Flanschscheiben (30) angeordnet ist,
**dass** wenigstens ein Verformungssensor (50) auf einer Umfangsfläche des Hohlzylinders (40) angeordnet ist und
**dass** die Einspritzkraftsensoranordnung (10) zwischen einem eine translatorische Kraft übertragenden Bauteil (70) eines Spindelantriebs (80) der Spritzgießeinheit (20) und einem relativ zu diesem Bauteil beweglichen Teil eines Dosierantriebs (55), insbesondere einem Dosiergetriebe (60), der Spritzgießeinheit anordenbar ist.

2. Einspritzkraftsensoranordnung (10) nach Anspruch 1, **dadurch gekennzeichnet, dass** bei einer Anordnung der Einspritzkraftsensoranordnung (10) zwischen dem Teil des Dosierantriebs (55) und dem eine translatorische Kraft übertragenden Bauteil (70) des Spindelantriebs (80) die translatorische Kraft rechtwinklig zu kreisringförmigen Flächen (30a) der kreisringförmigen Flanschscheiben (30) in der Nähe des Außenradius der kreisringförmigen Flanschscheiben (30) übertragen wird, wenn die Wandung (45) des Hohlzylinders (40) bündig an der Wandung (35) des Innenradius der kreisringförmigen Flanschscheiben (30) angeordnet ist, und dass die translatorische Kraft rechtwinklig zu kreisringförmigen Flächen (30a) der kreisringförmigen Flanschscheiben (30) in der Mitte zwischen einem Innenradius und einem Außenradius der kreisringförmigen Flanschscheiben (30) übertragen wird, wenn die Wandung (45) des Hohlzylinders (40) in der Mitte zwischen einem Innenradius und einem Außenradius an der Wandung (35) der kreisringförmigen Flanschscheiben (30) angeordnet ist.

3. Einspritzkraftsensoranordnung (10) nach einem der vorhergehenden Ansprüche, **dadurch gekennzeichnet, dass** das die translatorische Kraft übertragenden Bauteil (70) eine nicht rotierende Spindelmutter oder ein die nicht rotierende Spindelmutter und einen Gewindetrieb umgebendes und mit diesen verbundenes Gehäuse (90) ist.

4. Einspritzkraftsensoranordnung (10) nach einem der vorhergehenden Ansprüche, **dadurch gekennzeichnet, dass** der mindestens eine Verformungssensor (50) ein Dehnungsmessstreifen ist, der eingerichtet ist, eine Expansion oder Kontraktion der Wandung (45) des Hohlzylinders (40) zu detektieren.

5. Einspritzkraftsensoranordnung (10) nach einem der vorhergehenden Ansprüche, **dadurch gekennzeichnet, dass** der mindestens eine Verformungssensor (50) eine optische und/oder messtechnische Einheit ist, die eingerichtet ist, eine Abstandsveränderung zwischen den kreisringförmigen Flanschscheiben (30) zu detektieren.

6. Einspritzkraftsensoranordnung (10) nach einem der vorhergehenden Ansprüche, **dadurch gekennzeichnet, dass** entweder vier Verformungssensoren (50) auf der Umfangsfläche des Hohlzylinders (40) um jeweils 90° versetzt angeordnet sind oder zwei Verformungssensoren (50), die auf der Umfangsfläche des Hohlzylinders (40) angeordnet sind, sich um 180° versetzt gegenüberliegen und zwei weitere Verformungssensoren (50), die ebenfalls auf der Umfangsfläche des Hohlzylinders (40) angeordnet sind und sich auch um 180° versetzt gegenüberliegen, um einen Wert, der kleiner 90° ist, versetzt zu den beiden ersten Verformungssensoren (50) angeordnet sind, wobei die Verformungssensoren (50) jeweils zu einer elektrischen Halb- oder Vollbrücke verschaltbar sind.

7. Einspritzkraftsensoranordnung (10) nach einem der vorhergehenden Ansprüche, **dadurch gekennzeichnet, dass** der mindestens eine Verformungssensor (50) über mindestens eine elektrische Signalleitung (100) mit einer an einer der kreisringförmigen Flanschscheiben (30) und/oder dem Hohlzylinder (40) angeordneten elektrischen Kupplung (110) verbunden ist, die mit einer elektrischen Signalverstärker- und Auswerteeinheit (108) verbindbar ist.

8. Einspritzkraftsensoranordnung (10) nach Anspruch 7, **dadurch gekennzeichnet, dass** der mindestens eine Verformungssensor (50) auf einer vorgefertigten, insbesondere vertieften, Fläche (48) auf der Umfangsfläche des Hohlzylinders (40) angeordnet ist und/oder die mindestens eine elektrische Signalleitung (100) in mindestens einem vorgefertigten Kanal der Wandung (45) des Hohlzylinders (40) und/oder der Wandung (35) einer der kreisringförmigen Flanschscheiben (30) angeordnet ist und/oder die elektrische Kupplung (110) auf einer vorgefertigten, vertieften Fläche (38) einer der kreisringförmigen Flanschscheiben (30) angeordnet ist.

9. Einspritzkraftsensoranordnung (10) nach Anspruch 7, **dadurch gekennzeichnet, dass** der mindestens eine Verformungssensor (50) und/oder die mindestens eine elektrische Signalleitung (100) und/oder die elektrische Kupplung (110) auf einem Trägersystem (120), insbesondere einem Blechring, vormontiert sind, das eingerichtet ist, mit der Einspritzkraftsensoranordnung (10) verbunden zu werden und den mindestens einen Verformungssensor (50) auf der Umfangsfläche des Hohlzylinders (40) anzuordnen.

10. Einspritzkraftsensoranordnung (10) nach einem der vorhergehenden Ansprüche, **dadurch gekennzeichnet, dass** die Geometrie der Einspritzkraftsensoranordnung (10), insbesondere wenigstens eines der Elemente umfassend den Innenradius, den Außenradius, die Dicke der Wandung (35) der kreisringförmigen Flanschscheiben (30), die Länge und Dicke der Wandung (45) des Hohlzylinders (40), auf einen zu messenden Kraftbereich anpassbar ist.

11. Spritzgießeinheit (20) einer Spritzgießmaschine zur Verarbeitung von Kunststoffen und anderen plastifizierbaren Materialien, umfassend einen Dosierantrieb (55) und einen damit verbundenen Spindelantrieb (80), **dadurch gekennzeichnet, dass** zwischen einem eine translatorische Kraft übertragenden Bauteil (70) des Spindelantriebs (80) und einem relativ zu diesem Bauteil (70) beweglichen Teil des Dosierantriebs (55), insbesondere einem Dosiergetriebe (60), eine Einspritzkraftsensoranordnung (10) nach einem der Ansprüche 1 bis 10 angeordnet ist.

12. Spritzgießeinheit (20) nach Anspruch 11, **dadurch gekennzeichnet, dass** entweder die Einspritzkraftsensoranordnung (10) mit dem Teil des Dosierantriebs (55) und/oder mit dem eine translatorische Kraft übertragenden Bauteil (70) des Spindelantriebs (80) wirkverbunden ist oder die Einspritzkraftsensoranordnung (10) und das Dosiergetriebe (60) aus einem Guss sind bzw. die Einspritzkraftsensoranordnung (10) in das Dosiergetriebe (60) integriert ist und mit dem eine translatorische Kraft übertragenden Bauteil (70) des Spindelantriebs (80) wirkverbunden ist.

13. Spritzgießeinheit (20) nach Anspruch 11 oder 12, **dadurch gekennzeichnet, dass** ein Innendurchmesser der Wandung (35) der kreisringförmigen Flanschscheiben (30) größer als ein Außendurchmesser einer Gewindespindel (85) des Spindelantriebs (80) ist.

14. Spritzgießmaschine zur Verarbeitung von Kunststoffen und anderen plastifizierbaren Materialien, **dadurch gekennzeichnet, dass** sie eine Spritzgießeinheit (20) nach einem der Ansprüche 11 bis 13 mit einer Einspritzkraftsensoranordnung (10) nach einem der Ansprüche 1 bis 10 aufweist.
